# EUROPEAN PATENT SPECIFICATION

(11) **EP 3 945 281 B1**
(45) Date of publication and mention of the grant of the patent: **21.12.2022**
(21) Application number: 21185225.6
(22) Date of filing: 13.07.2021
(51) Int. Cl.: G01B 11/245, G01B 11/25, B60M 1/28

(54) **OPTICAL MEASUREMENT SYSTEM FOR AN OVERHEAD LINE**
OPTISCHES MESSSYSTEM FÜR EINE FREILEITUNG
SYSTÈME DE MESURE OPTIQUE POUR UNE LIGNE AÉRIENNE

(30) Priority: 28.07.2020 NL 2026149
(43) Date of publication of application: 02.02.2022
(73) Proprietor: VolkerWessels Intellectuele Eigendom B.V., 3826 PA Amersfoort (NL)
(72) Inventor: VAN MEETEREN, Christiaan Maarten Alexander, 4032 NS Ommeren (NL); DE JONG, Jacobus Leonardus Maria, 3906AD Veenendaal (NL); KETELS, Adrianus Marinus Cornelius Hendrikus, 5151MT Drunen (NL)
(74) Representative: Nederlandsch Octrooibureau

(56) References cited:
- EP-A1- 3 051 252
- EP-A1- 3 252 428
- WO-A1-02/077569
- JP-A- H09 101 114
- JP-A- 2010 243 275

## Description

### Field of the invention

The present invention relates to an optical measurement system for an overhead line, in particular an optical measurement system for determining outer contours of one or more contact wires of an overhead line used by trains, trams, trolleybuses and the like.

### Background art

European patent application EP 3 051 252 A1 discloses a trolley wire measurement apparatus for measurement of wearing portions of a trolley wire from a traveling car. The trolley wire measurement apparatus comprises a first trolley wire measuring instrument on a rotating stage provided on a left-hand side of a car, and a second trolley wire measuring instrument on a rotating stage provided on a right-hand side of the car. Between the first and second trolley wire measuring instrument there is provided a trolley wire height and deviation detector arranged near the centre of the car. Each of the first and second trolley wire measuring instruments comprises a light emitting (or projection) unit and a light receiving unit, wherein the light emitting unit converts a monochromatic light having a specific wavelength within a range of infrared light into a strip slit light by function of a light emitting lens, thereby irradiating the trolley wire. Each light receiving unit receives a reflection guided from the trolley wire through an image forming lens. The trolley wire height and deviation detector, being constructed by a laser measuring sensor, is provided on a roof of the car, wherein the trolley wire height and deviation detector receives reflection light from the trolley wire above the roof of the car while scanning laser light in the direction of deviation of the trolley wire, thereby measuring a distance and an angle defined between the laser measuring sensor and the trolley wire.

### Summary of the invention

The present invention seeks to provide an improved optical measurement system for determining outer contours of one or more contact wires of an overhead line, where the measurement system is less sensitive to vibration and allows for increased speed and accuracy at which the outer contours of the one or more contact wires can be observed and analysed. The measurement system can be readily (retro)fitted to any desired vehicle for movement underneath the one or more contact wires. Furthermore, the measurement system allows for taking accurate measurements during the day or night whilst the one or more contact wires remain live.

According to the present invention, an optical measurement system for determining outer contours of one or more contact wires of an overhead line is provided, comprising
an elongated first instrument base and an elongated second instrument base, wherein the first instrument base compromises a first mounting member configured for releasable connection to a first side of a vehicle, and wherein the second instrument base compromises a second mounting member configured for releasable connection to an opposing second side of the vehicle, wherein the vehicle is arranged for movement underneath the one or more contact wires of the overhead line.

The first instrument base comprises a first laser projector and a first camera assembly longitudinally spaced apart along the first instrument base, and wherein the second instrument base comprises a second laser projector and a second camera assembly longitudinally spaced apart along the second instrument base.

The first camera assembly comprises a first overview camera, a first detail camera and a first mirror moveably arranged on the first instrument base in front of the first detail camera, and wherein the second camera assembly comprises a second detail camera and a second mirror moveably arranged on the second instrument base in front of the second detail camera.

The optical measurement system further comprises a processing system configured for communication with the first overview camera and the first and second mirror;
wherein, in a mounted state of the first and second instrument base on the first side and second side of the vehicle, respectively, the first and second laser projector are configured to project a first and second transverse laser line, respectively, on the one or more contact wires;
wherein the first overview camera is arranged to capture an overview image of the one or more contact wires;
wherein the processing system is arranged to process the overview image for locating the one or more contact wires, and wherein the processing system is further arranged to control a first position of the first mirror and a second position of the second mirror based on the located one or more contact wires, and
wherein the first detail camera is arranged to capture a first detail image from the first mirror of the projected first and second transverse laser lines on the one or more contact wires, and wherein the second detail camera is arranged to capture a second detail image from the second mirror of the projected first and second transverse laser lines on the one of more contact wires.

According to the present invention, the optical measurement system provides the moveable first and second mirrors to accurately track and capture the projected first and second transverse laser line on the one or more contact wires as the vehicle is in motion along and underneath the overhead line.

In contrast to the prior art, by utilizing the first and second movable mirrors reduces the number of components of which motion needs to be controlled for optimal tracking of the one or more contact lines and the first and second transverse laser lines projected thereon. The moveable first and second mirror allow for rapid and accurate adjustability in correspondence with the location of the one or more contact wires, wherein the first overview camera allows the location of the one or more contact wires to be determined, based on which the first and second mirror allows accurate, detailed tracking of the projected first and second transverse laser lines on the one or more contact wires.

Furthermore, the first overview camera in conjunction with the first and second detail cameras allow for a cost effective design as the first and second detail camera need not provide high resolution imaging as they only capture a relatively small area above the vehicle corresponding to location of the one or more contact wires. When installed, the moveable first and second mirror reflect an image of this smaller area and project/reflect it onto the first and second detail cameras. Therefore, the first overview camera allows effective determination of the location of the one or more contact wires and the projected first and second transverse laser lines thereon. Based on the determined location, the first and second mirror allow for detailed tracking of the one or more contact wires and the projected first and second transverse laser lines thereon. By combining the projected first and second transverse laser lines captured by both the first and the second detail camera, an accurate outer contour of each of the one or more contact wires can be obtained, which in turn allows for wear and various geometric properties of the contact wires to be determined.

### Short description of drawings

The present invention will be discussed in more detail below, with reference to the attached drawings, in which
Figure 1 shows a schematic side view of an optical measurement system according to an embodiment of the present invention.
Figure 2 shows a schematic top view of an optical measurement system according to an embodiment of the present invention.
Figure 3 shows a schematic partial top view of an optical measurement system according to an embodiment of the present invention.

### Description of embodiments

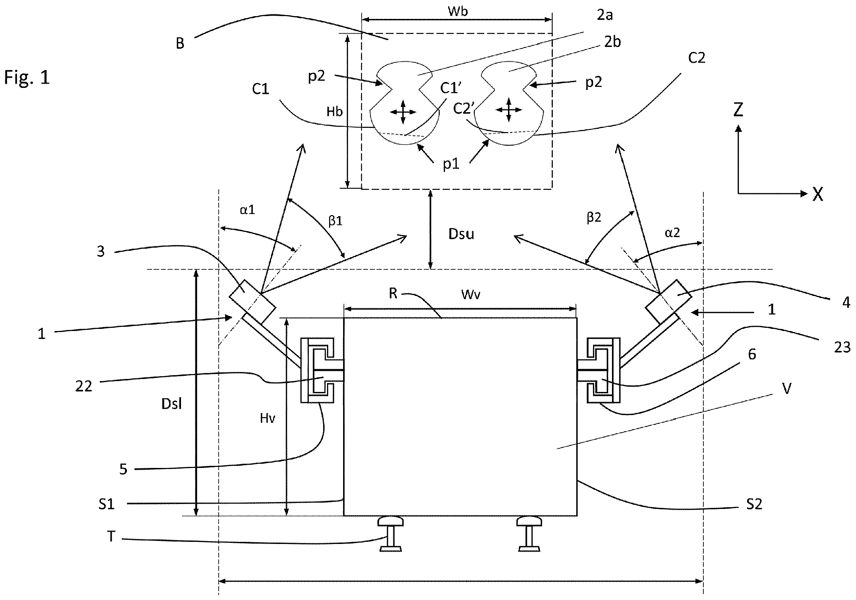

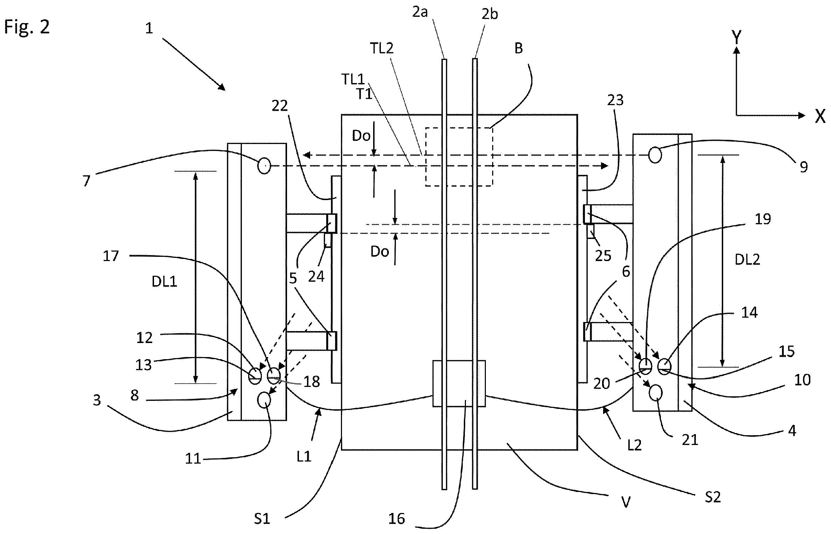

Figures 1 and 2 show a schematic side view and a schematic top view of an optical measurement system 1 according to embodiments of the present invention.

In these figures one or more contact wires 2a, 2b of an overhead line are depicted for use by trains, trams, trolley busses and the like. These vehicles mechanically engage the one or more contact wires for drawing electric power therefrom, so that the one or more contact wires 2a, 2b are subject to wear and so outer, transverse contours C1, C2 of the one or more contact wires 2a, 2b change over time. For example, due to a pantograph sliding along the one or more contact wires 2a, 2b, the contours C1, C2 may start to flatten as indicated by the flattened contours C1', C2'. Such wear need not be uniform and so the one or more contact wires 2a, 2b may show varying degrees of wear along the overhead line. At some point the one or more contact wires 2a, 2b may be worn to such an extent in that replacement of the one or more contact wires 2a, 2b at particular sections of the overhead line is required to prevent failure.

According to the present invention, to monitor the evolution of wear of the one or more contact wires 2a, 2b along the overhead line, an optical measurement system 1 is provided through which outer contours C1, C2, C1', C2' can be accurately determined along any length of the one or more contact wires 2a, 2b even when these contact wires 2a, 2b are still live.

It is important note that in real world scenarios the one or more contact wires 2a, 2b may change position with respect to a e.g. track T along the overhead line. As depicted in Figure 1, the one or more contact wires 2a, 2b may change position with respect to the track T within a bounding box B. In an exemplary embodiment the bounding box B has a width Wb and height Hb each between 1 and 1.5 meters, e.g. Wb = 1.2 meter, Hb = 1.3 meter.

Therefore, the optical measurement system 1 of the present invention needs to be able to track the one or more contact wires 2a, 2b within such a bounding box B along the overhead line.

Another important point to note is that, according to regulations, the optical measurement system 1 may need to remain at a safe distance from the one or more contact wire 2a, 2b when live. To that end a safe upper distance Dsu may be defined between a lower side of the bounding box B and the optical measurement system 1. In an exemplary embodiment, the safe upper distance Dsu may be between 1 and 2 metres, e.g. 1.5 meters. Logically, the safe upper distance Dsu is in part determined by the voltage on the one or more contact wires 2a, 2b. In an exemplary embodiment, the voltage on the one or more contact wires 2a, 2b is about 1.5 kV in the Netherlands, but higher voltages are conceivable and as such the safe upper distance Dsu increases.

There can also be defined a safe lower distance Dsl as measured from the track T upward. The optical measurement system 1 is then to remain below the safe lower distance Dsl when the one or more contact wires 2a, 2b are live. In an exemplary embodiment, the safe lower distance Dsl is between 3 to 4 meters, e.g. 3.3 meters.

The optical measurement system 1 of the present invention is to be mounted on a vehicle V which is arranged to move underneath and along the one or more contact wires 2a, 2b of the overhead line. The vehicle V may be a regular train or tram, but a dedicated measurement vehicle V may be used as well. Although a track T is depicted for exemplary purposes, the track T may just as well be a regular road surface, where the vehicle V may then be a trolley bus. In an exemplary embodiment, the vehicle V on which the optical measurement system 1 may be mounted has a width Wv between 2 and 2.5 meters and a height Hv between 3 and 3.5 meters, e.g. Wv = 2.1 meters, Hv = 3.1 meters.

According to the present invention, the optical measurement system 1 comprises an elongated first instrument base 3 and an elongated second instrument base 4, wherein the first instrument base 3 compromises a first mounting member 5 configured for releasable connection to a first side S1 of a vehicle V, and wherein the second instrument base 4 compromises a second mounting member 6 configured for releasable connection to an opposing second side S2 of the vehicle V. As stated earlier, the vehicle V is capable and arranged for movement underneath the one or more contact wires 2a, 2b of the overhead line.

As will be discussed in further detail below, in an exemplary embodiment the first and second instrument bases 3, 4 are releasable mountable to opposing sides S1, S2 (i.e. the side walls)of the vehicle V and not to a roof R thereof, provides for a much wider transverse arrangement of the first and second instrument bases 3, 4 with respect to the one or more contact wires 2a, 2b and as such allow outer contours C1, C2 to be determined over a wider angle, e.g. 120° degrees. This in turn allows for more information on the width/length and height of each contour C1, C2. In an alternative embodiment, the first and second instrument bases 3, 4 are releasable mountable on left and right sides of the roof R of the vehicle, but positioned as far as possible from the one or more contact wires 2a, 2b to obtain a wide transverse arrangement of the first and second instrument bases 3, 4.

As depicted in Figure 2, the first instrument base 3 comprises a first laser projector 7 and a first camera assembly 8 longitudinally or lengthwise spaced apart along the first instrument base 3. Here, the first instrument base 3 may be seen as an elongated rectangular base configured to extend in longitudinal manner along the vehicle V. In an embodiment, the first instrument base 3 will extend substantially horizontally along the vehicle V and a such be aligned with the direction of motion of the vehicle V when in use.

The second instrument base 4 comprises a second laser projector 9 and a second camera assembly 10 longitudinally or lengthwise spaced apart along the second instrument base 4. Here, the second instrument base 4 may be seen as an elongated rectangular base configured to extend in longitudinal manner along the vehicle V. In an embodiment, the second instrument base 4 will extend substantially horizontally along the vehicle V and a such be aligned with the direction of motion of the vehicle.

As depicted, the first laser projector 7 and the first camera assembly 8 are longitudinally spaced apart by a distance DL1 which can be chosen so as to achieve good triangulation. Likewise, the second laser projector 9 and the second camera assembly 10 are longitudinally spaced apart by a distance DL2 which can also be chosen so as to achieve good triangulation. It is noted that in an embodiment the distances DL1 and DL2 need not be the same, although from a practical point of view, and without loss of generalisation, the distances DL1 and DL2 may be identical.

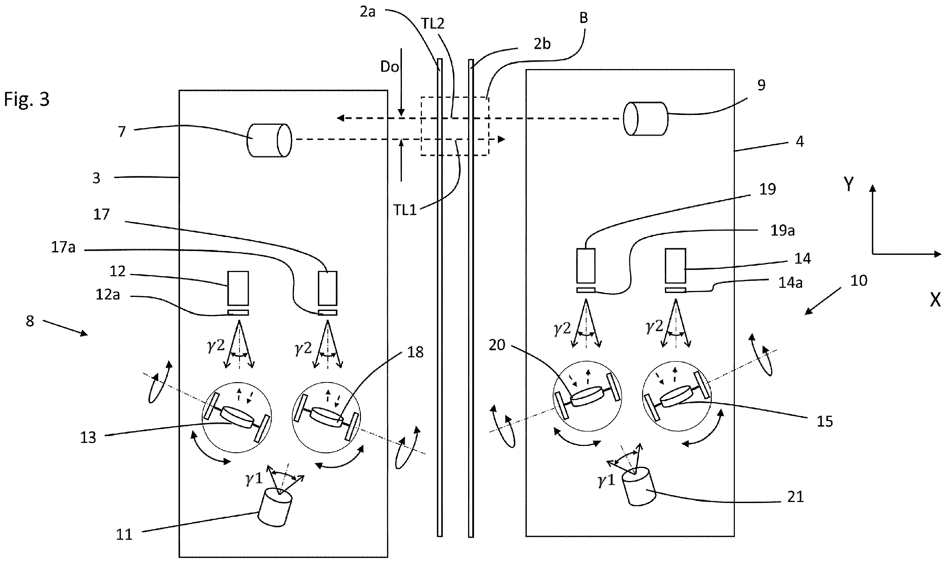

With further reference to the exemplary embodiment of Figure 3, showing a schematic partial top view of the optical measurement system 1 without the vehicle, the first camera assembly 8 comprises a first overview camera 11, a first detail camera 12 and a first mirror 13 moveably arranged on the first instrument base 3 in front of the first detail camera 12, and the second camera assembly 10 comprises a second detail camera 14 and a second mirror 15 moveably arranged on the second instrument base 4 in front of the second detail camera 14.

A processing system 16, see Figure 2, is provided configured for communication with the first overview camera 11 and the first and second detail camera 12, 14 and/or the first and second mirror 13, 15. In the embodiment shown, the processing system 16 may be arranged on the vehicles V and communicatively connected to the first and second instrument base 3, 4 via communication lines L1, L2.

In a mounted state of the first and second instrument base 3, 4 on the first side S1 and second side S2 of the vehicle V, respectively, the first and second laser projector 7, 9 are configured to project a first and second transverse laser line TL1 and TL2, respectively, on the one or more contact wires 2a, 2b. The first overview camera 11 is then arranged to capture an overview image above the vehicle V including the one or more contact wires 2a, 2b. The processing system 16 is arranged to process the overview image for locating the one or more contact wires 2a, 2b and the processing system is further arranged to control a first position of the first camera 12 or first mirror 13 and a second position of the second camera 14 or second mirror 15 based on the located one or more contact wires 2a, 2b. The first detail camera 12 is arranged to capture a first detail image from the first mirror 13 of the projected first and second transverse laser line TL1, TL2 on the one or more contact wires 2a, 2b, and the second detail camera 14 is arranged to capture a second detail image from the second mirror 15 of the projected first and second transverse laser line TL1, TI2 on the one of more contact wire 2a, 2b.

The optical measurement system 1 in an exemplary embodiment comprises the moveable first and second mirrors 13, 15 to accurately track and capture the projected first and second transverse laser line TL1, TL2 on the one or more contact wires 2a, 2b as the vehicle V is in motion along and underneath the overhead line. This allows the first and second detail cameras 12, 14 to remain stationary with respect to the first and second instrument bases 3, 4, respectively, but also allowing the first and second laser projectors 7, 9 to remain stationary with respect to the first and second instrument bases 3, 4.

It is worth noting that in contrast to the prior art systems, by utilizing the first and second movable mirrors 13, 15 reduces the number of components of which motion needs to be controlled for optimal tracking of the one or more contact lines 2a, 2b and in particular the first and second transverse laser lines TL1, TI2 projected thereon. The moveable first and second mirror 13, 15 allow for rapid and accurate adjustability in correspondence with a current location of the one or more contact wires 2a, 2b, wherein the first overview camera 11 allows the location of the one or more contact wires 2a, 2b to be determined. In turn, the first and second mirror 13, 15 accurately track the projected first and second transverse laser lines TL1, TL2 on the one or more contact wires 2a, 2b as the vehicle V moves there along.

It is further noted that the first overview camera 11 in conjunction with the first and second detail cameras 12, 14 allow for a cost effective design as the first and second detail camera 12, 14 need not provide high resolution imaging as they only capture a relatively small area above the vehicle V corresponding to the location of the one or more contact wires 2a, 2b as determined from the first overview camera 11. The moveable first and second mirror 13, 15 then reflect an image of this smaller area and project it onto the first and second detail cameras 12, 14. Therefore, the first overview camera 11 allows effective determination of the location of the one or more contact wires 2a, 2b, based on which location the first and second mirror 13, 15 allow for detailed tracking of the one or more contact wires 2a, 2b and the projected first and second transverse laser lines TL1, TL2. By combining the projected first and second transverse laser lines TL1, TL2 captured by the first detail camera 12 and the second detail camera 14, accurate outer contours C1, C2, C1', C2' of the one or more contact wires 2a, 2b can be obtained over a wide angle. This in turn allows for wear and various geometric properties of each of the one or more contact wires 2a, 2b to be determined.

Since the optical measurement system 1 is configured to be mounted on opposing sides S1, S2 of the vehicle V by virtue of the first and second mounting members 5, 6, allows for a wider viewing angle for imaging the outer contours C1, C2, C1', C2'.

In particular, as depicted in Figure 1, each of the outer contours C1, C2, C1', C2' of the one or more contact wires 2a, 2b may comprise an arched engagement portion p1 and a grooved mounting portion p2. The arched engagement portion p1 is a contour portion that defines a lower part of each of the one or more contact wires 2a, 2b and engages with e.g. the pantograph of a train, tram or trolleybus. The grooved mounting portion p2 is a contour portion that defines an upper part of each of the one or more contact wires 2a, 2b and engages a mounting bracket (not shown) at particular locations along the overhead line for suspending the one or more contact wires 2a, 2b above the track T or road. As shown in Figure1, in an exemplary embodiment the grooved mounting portion p2 is a V-shaped groove which allows each of the one or more contact wires 2a, 2b to be clamped by a mounting bracket (not shown).

By virtue of the first and second mounting members 5, 6 of the first and second instrument bases 3, 4, respectively, allows the optical measurement system 1 to be mounted to opposing sides S1, S2 of the vehicle V and as such allows the projected first and second transverse laser lines TL1, TL2 to extend along the arched engagement portion p1 of the lower part of each of the one or more contact wires 2a, 2b as well as the grooved mounting portion p2 of the upper part each of the one or more contact wires 2a, 2b.

By allowing the grooved mounting portion p2 of each of the one or more contact wires 2a, 2b to be observable by the first and second detail cameras 12, 14 provides for a reference contour that does not significantly wear and change over time. Such a reference contour may then be used to improve accuracy and reliability at which each of the one or more contact wires 2a, 2b can be measured by analysing the arched contour portion p1 and by taking into account the grooved mounting portion p2 as a reference contour.

As mentioned earlier, the first overview camera 11 is arranged and configured to capture an overview image of the one or more contact wires 2a, 2b above the vehicle V. The processing system 16 is then arranged to process the overview image for locating the one or more contact wires 2a, 2b, and in particular the first and second transverse laser lines TL1, TL2 projected thereon. The processing system 16 further allows control of a first position of the first mirror 13 and a second position of the second mirror 15 based on the located one or more contact wires 2a, 2b. Once positioned accordingly, the first and second mirrors 13, 15 reflect an image of the first and second transverse laser lines TL1, TL2 to the first and second detail cameras 12, 14.

Therefore, in view of the above, the first overview camera 11 and the first and second detail cameras 12, 14 allow for a two stage tracking process wherein, in a first stage, the first overview camera 11 is configured to capture an overview image of a large area including the bounding box B above the vehicle V. The processing system 16 is then configured to determine the location of the one or more contact wires 2a, 2b, including the first and second transverse laser lines TL1, TL2. Based on this overview image, in a second stage, the processing system 16 is configured to control the first and second mirror 13, 15 for allowing a detail image to be capture of the first and second transverse laser lines TL1, TL2 by the first and second detail cameras 12, 14. In an embodiment, the first and second detail cameras 12, 14 are configured to simultaneously capture a detail image.

Such a two stage image process may be achieved by an embodiment wherein the first overview camera 11 has a field of view *γ*1 larger than a field of view *γ*2 of the first and second detail camera 12, 14. The larger field of view *γ*1 of the first overview camera 11 allows for a larger area above the vehicle V to be captured whilst the smaller field of view *γ*2 of the first and second detail camera 12, 14 allows for a smaller area to be captured. Because of the smaller area captured by the first and second detail cameras 12, 14, it is still possible to get a sufficiently high resolution image of the first and second transverse laser lines TL1, TL2 even though the first and second detail cameras 12, 14 need not exhibit high resolution imaging capability.

In an exemplary embodiment, the field of view *γ*1 of the first overview camera 11 is between 40° and 50° degrees, e.g. 45° degrees, and wherein the field of view *γ*2 of the first and second detail cameras 12, 14 is smaller than 40° degrees. This allows the first overview camera 11 to capture sufficient detail of a large area above the vehicle V for locating the one or more contact wires 2a, 2b, wherein the first and second detail cameras 12, 14 are able to capture in detail the first and second transverse laser lines TL1, TL2.

As further depicted in Figure 2 and 3, in an embodiment the first camera assembly 8 comprises a third detail camera 17 and optionally a third mirror 18 moveably arranged on the first instrument base 3 in front of the third detail camera 17, and the second camera assembly 10 comprises a fourth detail camera 19 and optionally a fourth mirror 20 moveably arranged on the second instrument base 4 in front of the fourth detail camera 19. The processing system 16 is further configured for communication with the third and fourth detail camera 17, 19 and/or the third and fourth mirror 18, 20 also.

In the mounted state of the first and second instrument base 3, 4, the processing system 16 is further arranged to e.g. control a third position of the third detail camera 17/ third mirror 18 and a fourth position of the fourth detail camera 19/ fourth mirror 20 based on the located one or more contact wires 2a, 2b. The third detail camera 17 is arranged to capture a third detail image from the third mirror 18 of the projected first and second transverse laser line TL1, TL2, on the one or more contact wires 2a, 2b, and the fourth detail camera 19 is arranged to capture a fourth detail image from the fourth mirror 20 of the projected first and second transverse laser line on the one of more contact wire 2a, 2b. In this embodiment the first and second camera assemblies 8, 10 each comprise a pair of detail cameras, i.e. the first and third detail camera 12, 17 on the first instrument base 3 and the second and fourth detail camera 14, 19 on the second instrument base 4.

By utilizing a pair of detail cameras on each of the first and second instrument bases 3, 4 it is possible to combine captured images of each pair of detail cameras to achieve even higher accuracy when determining the outer contours C1, C2, C1', C2'. Also, by utilizing a pair of detail cameras on each of the first and second instrument bases 3, 4, it is possible to improve tracking of the position and the orientation of the first and second transverse laser lines TL1, TL2.

The above embodiment allows for four (4) images each of which comprises the first and second transverse laser lines TL1, TL2 and wherein these four (4) images can be combined to achieve highly accurate measurements of the outer contours C1, C2, C1', C2' of the one or more contact wires 2a, 2b.

In an advantageous embodiment, the second camera assembly 10 of the second instrument base 4 may comprises a second overview camera 21. This provides further image data on the area above the vehicle V so that through combining captured images from the first and second overview cameras 11, 21 the location of the one or more contact wires 2a, 2b can be determined more accurately and reliably.

It is noted that in an embodiment the third and fourth detail cameras 17, 19 may have the same or similar field of view *γ*2 as the first and second detail camera 12, 14. So in this case the field of view *γ*1 of the first overview camera 11 is also larger than the field of view *γ*2 of the third and fourth detail camera 17, 19.

Likewise, in an embodiment, the field of view *γ*1 of the second overview camera 21 is larger than the field of view *γ*2 of the first and second detail cameras 12, 14 and/or the third and the fourth detail camera 17, 19.

To improve accuracy in determining the location of the one or more contact wires 2a, 2b, an embodiment is provided wherein the first overview camera 11 is a black and white camera, which provides improved contrast of the one or more contact wires 2a, 2b in a captured image thereof with respect to other features in the captured image.

In an advantageous embodiment, the second overview camera 21 may be a colour camera, thereby facilitating further image analysis on various coloured features to achieve accurate and reliable determination of the location of the one or more contact wires 2a, 2b.

In contrast to the prior art, neither the first overview camera 11 nor the second overview camera 21 need to be placed centrally on the roof R of vehicle V, thereby making the optical measurement system 1 further vehicle independent and allows for further simplicity when mounting and demounting the measurement system 1.

Referring to Figure 1, as mentioned earlier the elongated first instrument base 3 comprises the first mounting member 5 configured for releasable connection to the first side S1 of the vehicle V, and wherein the elongated second instrument base 4 comprises the second mounting member 6 configured for releasable connection to the opposing second side S2 of the vehicle V.

To facilitate alignment accuracy with respect to the vehicle V and alignment accuracy between the first and second instrument bases 3, 4, an embodiment is provided wherein the optical measurement system 1 further comprises an elongated first and an elongated second rail member 22, 23 each being configured for being mounted to the first and second side S1, S2 of the vehicle V, respectively, and wherein the first and second mounting member 5, 6 are configured for releasable connection to the first and second rail member 22, 23, respectively.

In this embodiment, the first and second rail member22, 23 can be positioned on the vehicle V and may, but need not, remain permanently on the vehicle V. Once the first and second rail member 22, 23 are mounted to the vehicle V, the first and second instrument bases 3, 4 are easily attached by virtue of the releasable first and second mounting members 5, 6. In doing so the alignment of the first and second instrument bases 3, 4 is ensured and very little further work is required by users mounting the optical measurement system 1.

In an advantageous embodiment, the first and second mounting member 5, 6 are configured for moveable (e.g. sliding) engagement along the first and second rail member 22, 23 respectively, wherein the first and second rail member 22, 23 comprise a first and a second adjustable blocking member 24, 25, respectively, for abutment with the first and second mounting member 5, 6, respectively.

This embodiment is advantageous as it allows the first and second instrument bases 3, 4 to be accurately positioned in reproducible manner in longitudinal direction as depicted in Figure 2. In particular, through the first and second rail members 22, 23 in conjunction with the first and second blocking members 24, 25, the first and second instrument bases 3, 4 can be mounted accurately in repeatable manner once the first and second blocking members 24, 25 are positioned as desired.

The first and second adjustable blocking members 24, 25 allow the first and second instrument bases 3, 4 to be longitudinal offset by an offset distance Do as shown in Figure 2. This in turn allows the first and second laser projector 7, 9 to be longitudinally offset by the offset distance Do. As a result, the projected first and second transverse laser lines TL1, TL2 are offset by the offset distance Do.

By having the first and second transverse laser lines TL1, TL2 at an offset distance Do allows for more accurate determination of the outer contours C1, C2, C1', C2' of the one or more contact wires 2a, 2b. In particular, when the overhead line comprises a plurality of contact wires 2a, 2b is it advantageous to place the first and second instrument bases 3, 4 at the offset distance Do and a such offset the first and second transverse laser lines TL1, TL2 to achieve increased measurement diversity and further information to accurately determine the outer contours C1, C2, C1', C2'.

In an exemplary embodiment the offset distance Do is less than 3 cm at which the projected first and second transverse laser lines TL1, TL2 are still considered to represent a single location on the one or more contact wires 2a, 2b and a such are combined to determine a single outer contour representative of the one or more contact wires 2a, 2b.

It is worth noting that the optical measurement system 1 is active when the vehicle V is moving along the track T so that a particular length of the one or more contact wires 2a, 2b can be investigated on wear and various geometric properties. In an embodiment the first and second camera assemblies 8 and 10 each have a maximum imaging throughput of about 500 images per second, then a speed of 54 km/h of the vehicle V corresponds to an image sample distance of about 3 cm along the one or more contact wires 2a, 2b.

Referring to Figure 1, in an exemplary embodiment the first and second laser projector 7, 9 may each exhibit a projection angel β1, β2 between 30° and 40° degrees, e.g. 35°, so that the projected first and second transverse laser lines TL1, TL2 will span the bounding box B and as such cover all possible positions of the one or more contact wires 2a, 2b in the bounding box B.

In a further advantageous embodiment, the first and the second instrument base 3, 4 are configured to be positioned at an inward angle α1, α2 between 30° and 40° degrees (measured from vertical) in the mounted state of the first and second instrument bases 3, 4. This embodiment facilitates visibility of the grooved mounting portion p2 to be used as a reference contour for determining the outer contours C1, C2, C1', C2'.

To further facilitate accurate determination of the outer contours C1, C2, C1', C2', an embodiment is provided wherein the first and the second laser projector 7, 9 are each configured for projecting blue laser light, e.g. laser light having a wavelength between 380-500 nm. Utilizing shorter wavelength in the visible spectrum allows not only for higher resolution imaging, but also reduces measurement sensitivity to sunlight during the day. Furthermore, blue laser light has better reflection from the one or more contact wires 2a, 2b.

In an advantageous embodiment, each of the first and second laser projector 7, 9 exhibits an output power of more than about 400 mW, e.g. 500 mW, to allow for sufficient intensity and clear projected first and second transverse laser lines TL1, TL2 on the one or more contact wires 2a, 2b.

To further increase measurement accuracy, the first and second detail cameras 12, 14 are each provided with a narrow band filter element 12a, 14a in correspondence with the blue light spectrum, thereby filtering out non-relevant light spectra. This embodiment can be further extended wherein the first and second detail cameras 12, 14 are each provided with a narrow band filter element 12a, 14a in correspondence with the blue light spectrum, and wherein the third and fourth detail cameras 17, 19 are each provided with a narrow band filter element 17a, 19a in correspondence with the blue light spectrum.

In a further aspect, a method of mounting the optical measurement system 1 to the vehicle V can now be explained, in particular in regard on allowing for the aforementioned offset distance Do for achieving two parallel first and second transverse laser lines TL1, TL2 on the one or more contact wires 2a, 2b. The method comprises the steps of connecting the first mounting member 5 of the first instrument base 3 to the first side S1 of the vehicle V and connecting the second mounting member 6 of second instrument base 4 to the second side S2 of the vehicle V such that the first laser projector 6 and the second laser projector 9 are offset in longitudinal direction over the offset distance Do.

Achieving the offset distance Do is greatly simplified when the first and second rail member 22, 23 are utilised, so that in an embodiment the method comprises connecting the first rail member 22 to the first side S1 of the vehicle V and connecting the second rail member 23 to the second side S2 of the vehicle V, and then connecting the first mounting member 5 of the first instrument base 3 to the first rail member 22 and connecting the second mounting member 6 of the second instrument base 4 to the second rail member 23, and moving (e.g. sliding) the first and/or the second instrument base 3, 4 along the first and/or the second rail member 22, 23 for obtaining the offset distance Do. In an advantageous embodiment the offset distance (Do) is smaller than 3 cm.

The present invention has been described above with reference to a number of exemplary embodiments as shown in the drawings. Modifications and alternative implementations of some parts or elements are possible, and are included in the scope of protection as defined in the appended claims.

## Claims

1. An optical measurement system (1) for determining outer contours of one or more contact wires (2a, 2b) of an overhead line, comprising
an elongated first instrument base (3) and an elongated second instrument base (4), wherein the first instrument base (3) comprises a first mounting member (5) configured for releasable connection to a first side (S1) of a vehicle (V), and wherein the second instrument base (4) comprises a second mounting member (6) configured for releasable connection to an opposing second side (S2) of the vehicle (V), wherein the vehicle (V) is arranged for movement underneath the one or more contact wires (2a, 2b) of the overhead line;
wherein the first instrument base (3) comprises a first laser projector (7) and a first camera assembly (8) longitudinally spaced apart along the first instrument base (3), and wherein the second instrument base (4) comprises a second laser projector (9) and a second camera assembly (10) longitudinally spaced apart along the second instrument base (4);
wherein the first camera assembly (8) comprises a first overview camera (11), a first detail camera (12) and a first mirror (13) moveably arranged on the first instrument base (3) in front of the first detail camera (12), and wherein the second camera assembly (10) comprises a second detail camera (14) and a second mirror (15) moveably arranged on the second instrument base (4) in front of the second detail camera (14); and further comprising
a processing system (16) configured for communication with the first overview camera (11) and the first and second mirror (13, 15);
wherein, in a mounted state of the first and second instrument base (3, 4) on the first side (S1) and second side (S2) of the vehicle (V), respectively, the first and second laser projector (7, 9) are configured to project a first and second transverse laser line (TL1, TL2), respectively, on the one or more contact wires (2a, 2b);
wherein the first overview camera (11) is arranged to capture an overview image of the one or more contact wires (2a);
wherein the processing system (16) is arranged to process the overview image for locating the one or more contact wires (2a, 2b), and wherein the processing system (16) is further arranged to control a first position of the first mirror (13) and a second position of the second mirror (15) based on the located one or more contact wires (2a, 2b), and
wherein the first detail camera (12) is arranged to capture a first detail image from the first mirror (13) of the projected first and second transverse laser lines (TL1, TL2) on the one or more contact wires (2a, 2b), and wherein the second detail camera (14) is arranged to capture a second detail image from the second mirror (15) of the projected first and second transverse laser lines (TL1, TL2) on the one of more contact wires (2a, 2b).

2. The optical measurement system according to claim 1, wherein the first overview camera (11) has a field of view (γ1) larger than a field of view (γ2) of the first and second detail camera (12, 14).

3. The optical measurement system according to claim 2, wherein the field of view (γ1) of the first overview camera (11) is between 40° and 50°, and wherein the field of view (γ2) of the first and second detail cameras (12, 14) is smaller than 40°.

4. The optical measurement system according to any one of claims 1-3, wherein the first camera assembly (8) comprises a third detail camera (17) and a third mirror (18) moveably arranged on the first instrument base (3) in front of the third detail camera (17), and wherein the second camera assembly (10) comprises a fourth detail camera (19) and a fourth mirror (20) moveably arranged on the second instrument base (4) in front of the fourth detail camera (19);
wherein the processing system (16) is further configured for communication with the third and fourth mirror (18, 20);
wherein, in the mounted state of the first and second instrument base (3, 4), the processing system (16) is further arranged to control a third position of the third mirror (18) and a fourth position of the fourth mirror (20) based on the located one or more contact wires (2a, 2b), and
wherein the third detail camera (17) is arranged to capture a third detail image from the third mirror (18) of the projected first and second transverse laser line (TL1, TL2) on the one or more contact wires (2a, 2b), and wherein the fourth detail camera (19) is arranged to capture a fourth detail image from the fourth mirror (20) of the projected first and second transverse laser line (TL1, TL2) on the one of more contact wires (2a, 2b).

5. The optical measurement system according to any one of claims 1-4, wherein the first overview camera (11) is a black and white camera.

6. The optical measurement system according to any one of claims 1-5, wherein the second camera assembly (10) of the second instrument base (4) further comprises a second overview camera (21).

7. The optical measurement system according to claim 6, wherein the second overview camera (21) is a colour camera.

8. The optical measurement system according to any one of claims 1-7, further comprising an elongated first and an elongated second rail member (22, 23) each being configured for being mounted to the first and second side (S1, S2) of the vehicle (V), respectively, and wherein the first and second mounting member (5, 6) are configured for releasable connection to the first and second rail member (22, 23), respectively.

9. The optical measurement system according to claim 8, wherein the first and second mounting member (5, 6) are configured for moveable engagement along the first and second rail member (22, 23) respectively, wherein the first and second rail member (22, 23) comprise a first and a second adjustable blocking member (24, 25), respectively, for abutment with the first and second mounting member (5, 6), respectively.

10. The optical measurement system according to any one of claims 1-9, wherein the first and the second laser projector (7, 9) are configured for projecting blue laser light having a wave length between 380 and 500 nm.

11. The optical measurement system according to claim 10, wherein each of the first and second laser projector (7, 9) exhibit an output power of more than 400 mW.

12. The optical measurement system according to claim 10 or 11, wherein the first and second detail camera (12, 14) are each provided with a narrow band filter element (12a, 14a) in correspondence with the blue laser light.

13. The optical measurement system according to any one of claims 1-12, wherein the first and the second instrument base (3, 4) are configured to be positioned at an inward angle (a1, a2) between 30° and 40° in the mounted state of the first and second instrument base (3, 4).

14. A method of mounting the optical measurement system (1) according to any one of claims 1-13 to a vehicle (V) arranged for movement underneath one or more contact wires (2a, 2b), comprising:
connecting the first mounting member (5) of the first instrument base (3) to a first side (S1) of the vehicle (V),
connecting the second mounting member (6) of the second instrument base (4) to a second side (S2) of the vehicle (V), such that the first laser projector (7) and the second laser projector (9) are offset in longitudinal direction over an offset distance (Do).

15. The method according to claim 14, wherein the offset distance (Do) is smaller than 3 cm.

## Patentansprüche

1. Optisches Messsystem (1) zur Bestimmung von Außenkonturen eines oder mehrerer Fahrdrähte (2a, 2b) einer Oberleitung, mit
eine längliche erste Instrumentenbasis (3) und eine längliche zweite Instrumentenbasis (4), wobei die erste Instrumentenbasis (3) ein erstes Befestigungselement (5) umfasst, das für eine lösbare Verbindung mit einer ersten Seite (S1) eines Fahrzeugs (V) konfiguriert ist, und wobei die zweite Instrumentenbasis (4) ein zweites Befestigungselement (6) umfasst, das für eine lösbare Verbindung mit einer gegenüberliegenden zweiten Seite (S2) des Fahrzeugs (V) konfiguriert ist, wobei das Fahrzeug (V) für eine Bewegung unterhalb des einen oder der mehreren Fahrdrähte (2a, 2b) der Oberleitung angeordnet ist;
wobei die erste Instrumentenbasis (3) einen ersten Laserprojektor (7) und eine erste Kameraanordnung (8) umfasst, die in Längsrichtung entlang der ersten Instrumentenbasis (3) beabstandet sind, und wobei die zweite Instrumentenbasis (4) einen zweiten Laserprojektor (9) und eine zweite Kameraanordnung (10) umfasst, die in Längsrichtung entlang der zweiten Instrumentenbasis (4) beabstandet sind;
wobei die erste Kameraanordnung (8) eine erste Übersichtskamera (11), eine erste Detailkamera (12) und einen ersten Spiegel (13) umfasst, der beweglich auf der ersten Instrumentenbasis (3) vor der ersten Detailkamera (12) angeordnet ist, und wobei die zweite Kameraanordnung (10) eine zweite Detailkamera (14) und einen zweiten Spiegel (15) umfasst, der beweglich auf der zweiten Instrumentenbasis (4) vor der zweiten Detailkamera (14) angeordnet ist; und ferner umfassend
ein Verarbeitungssystem (16), das zur Kommunikation mit der ersten Übersichtskamera (11) und dem ersten und zweiten Spiegel (13, 15) konfiguriert ist;
wobei in einem montierten Zustand der ersten und zweiten Instrumentenbasis (3, 4) auf der ersten Seite (S1) bzw. der zweiten Seite (S2) des Fahrzeugs (V) der erste und zweite Laserprojektor (7, 9) so konfiguriert sind, dass sie eine erste bzw. zweite transversale Laserlinie (TL1, TL2) auf den einen oder die mehreren Fahrdrähte (2a, 2b) projizieren;
wobei die erste Übersichtskamera (11) ausgebildet ist, um ein Übersichtsbild des einen oder der mehreren Fahrdrähte (2a) zu erfassen;
wobei das Verarbeitungssystem (16) so ausgebildet ist, dass es das Übersichtsbild verarbeitet, um den einen oder die mehreren Fahrdrähte (2a, 2b) zu lokalisieren, und wobei das Verarbeitungssystem (16) ferner so ausgebildet ist, dass es eine erste Position des ersten Spiegels (13) und eine zweite Position des zweiten Spiegels (15) basierend auf dem lokalisierten einen oder den mehreren Fahrdrähten (2a, 2b) steuert, und
wobei die erste Detailkamera (12) angeordnet ist, um ein erstes Detailbild von dem ersten Spiegel (13) der projizierten ersten und zweiten transversalen Laserlinien (TL1, TL2) auf dem einen oder den mehreren Fahrdrähten (2a, 2b) aufzunehmen, und wobei die zweite Detailkamera (14) angeordnet ist, um ein zweites Detailbild von dem zweiten Spiegel (15) der projizierten ersten und zweiten transversalen Laserlinien (TL1, TL2) auf dem einen oder den mehreren Fahrdrähten (2a, 2b) aufzunehmen.

2. Optisches Messsystem nach Anspruch 1, wobei die erste Übersichtskamera (11) ein Sichtfeld (y1) aufweist, das größer ist, als ein Sichtfeld (y2) der ersten und zweiten Detailkamera (12, 14).

3. Optisches Messsystem nach Anspruch 2, wobei das Sichtfeld (y1) der ersten Übersichtskamera (11) zwischen 40° und 50° liegt, und wobei das Sichtfeld (y2) der ersten und zweiten Detailkamera (12, 14) kleiner als 40° ist.

4. Optisches Messsystem nach einem der Ansprüche 1-3, wobei die erste Kameraanordnung (8) eine dritte Detailkamera (17) und einen dritten Spiegel (18) umfasst, der beweglich auf der ersten Instrumentenbasis (3) vor der dritten Detailkamera (17) angeordnet ist, und wobei die zweite Kameraanordnung (10) eine vierte Detailkamera (19) und einen vierten Spiegel (20) umfasst, der beweglich auf der zweiten Instrumentenbasis (4) vor dervierten Detailkamera (19) angeordnet ist;
wobei das Verarbeitungssystem (16) ferner zur Kommunikation mit dem dritten und vierten Spiegel (18, 20) konfiguriert ist;
wobei das Verarbeitungssystem (16) in dem montierten Zustand der ersten und zweiten Instrumentenbasis (3, 4) ferner so ausgebildet ist, dass es eine dritte Position des dritten Spiegels (18) und eine vierte Position des vierten Spiegels (20) basierend auf dem lokalisierten einen oder den mehreren Fahrdrähten (2a, 2b) steuert, und
wobei die dritte Detailkamera (17) angeordnet ist, um ein drittes Detailbild von dem dritten Spiegel (18) der projizierten ersten und zweiten transversalen Laserlinie (TL1, TL2) auf dem einen oder den mehreren Fahrdrähten (2a, 2b) aufzunehmen, und wobei die vierte Detailkamera (19) angeordnet ist, um ein viertes Detailbild von dem vierten Spiegel (20) der projizierten ersten und zweiten transversalen Laserlinie (TL1, TL2) auf dem einen oder den mehreren Fahrdrähten (2a, 2b) aufzunehmen.

5. Optisches Messsystem nach einem der Ansprüche 1-4, wobei die erste Übersichtskamera (11) eine Schwarz-Weiß-Kamera ist.

6. Optisches Messsystem nach einem der Ansprüche 1-5, wobei die zweite Kameraanordnung (10) der zweiten Instrumentenbasis (4) außerdem eine zweite Übersichtskamera (21) umfasst.

7. Optisches Messsystem nach Anspruch 6, wobei die zweite Übersichtskamera (21) eine Farbkamera ist.

8. Optisches Messsystem nach einem der Ansprüche 1 - 7, das ferner ein längliches erstes und ein längliches zweites Schienenelement (22, 23) umfasst, die jeweils so konfiguriert sind, dass sie an der ersten bzw. zweiten Seite (S1, S2) des Fahrzeugs (V) angebracht werden können, und wobei das erste und das zweite Befestigungselement (5, 6) so konfiguriert sind, dass sie lösbar mit dem ersten bzw. zweiten Schienenelement (22, 23) verbunden werden können.

9. Optisches Messsystem nach Anspruch 8, wobei das erste und das zweite Befestigungselement (5, 6) für einen beweglichen Eingriff entlang des ersten bzw. zweiten Schienenelements (22, 23) konfiguriert sind, wobei das erste und das zweite Schienenelement (22, 23) ein erstes bzw. ein zweites einstellbares Blockierelement (24, 25) zur Anlage an dem ersten bzw. zweiten Befestigungselement (5, 6) umfassen.

10. Optisches Messsystem nach einem der Ansprüche 1-9, wobei der erste und der zweite Laserprojektor (7, 9) so konfiguriert sind, dass sie blaues Laserlicht mit einer Wellenlänge zwischen 380 und 500 nm projizieren.

11. Optisches Messsystem nach Anspruch 10, wobei sowohl der erste als auch der zweite Laserprojektor (7, 9) eine Ausgangsleistung von mehr als 400 mW aufweisen.

12. Optisches Messsystem nach Anspruch 10 oder 11, wobei die erste und die zweite Detailkamera (12, 14) jeweils mit einem schmalbandigen Filterelement (12a, 14a) in Übereinstimmung mit dem blauen Laserlicht versehen sind.

13. Optisches Messsystem nach einem der Ansprüche 1 bis 12, wobei die erste und die zweite Instrumentenbasis (3, 4) so konfiguriert sind, dass sie im montierten Zustand der ersten und zweiten Instrumentenbasis (3, 4) in einem nach innen gerichteten Winkel (a1, a2) zwischen 30° und 40° positioniert sind.

14. Verfahren zur Montage des optischen Messsystems (1) nach einem der Ansprüche 1-13 an einem Fahrzeug (V), das zur Bewegung unter einem oder mehreren Fahrdrähten (2a, 2b) ausgebildet ist, umfassend:
Verbinden des ersten Befestigungselements (5) der ersten Instrumentenbasis (3) mit einer ersten Seite (S1) des Fahrzeugs (V),
Verbinden des zweiten Befestigungselements (6) der zweiten Instrumentenbasis (4) mit einer zweiten Seite (S2) des Fahrzeugs (V), so dass der erste Laserprojektor (7) und der zweite Laserprojektor (9) in Längsrichtung um einen Versatzabstand (Do) versetzt sind.

15. Verfahren nach Anspruch 14, wobei der Versatzabstand (Do) kleiner als 3 cm ist.

## Revendications

1. Système de mesure optique (1) pour déterminer les contours extérieurs d'un ou plusieurs fils de contact (2a, 2b) d'une ligne aérienne, comprenant :
une première base d'instrument allongée (3) et une seconde base d'instrument allongée (4), la première base d'instrument (3) comprenant un premier élément de montage (5) configuré pour une connexion amovible à un premier côté (S1) d'un véhicule (V), et la seconde base d'instrument (4) comprenant un second élément de montage (6) configuré pour une connexion amovible à un second côté opposé (S2) du véhicule (V), le véhicule (V) étant agencé pour un déplacement en dessous du ou des fils de contact (2a, 2b) de la ligne aérienne ;
dans lequel la première base d'instrument (3) comprend un premier projecteur laser (7) et un premier ensemble caméra (8) longitudinalement espacés le long de la première base d'instrument (3), et dans lequel la seconde base d'instrument (4) comprend un second projecteur laser (9) et un second ensemble caméra (10) longitudinalement espacés le long de la seconde base d'instrument (4) ;
dans lequel le premier ensemble caméra (8) comprend une première caméra de vue d'ensemble (11), une première caméra de détail (12) et un premier miroir (13) agencé de manière déplaçable sur la première base d'instrument (3) à l'avant de la première caméra de détail (12), et dans lequel le second ensemble caméra (10) comprend une deuxième caméra de détail (14) et un deuxième miroir (15) agencé de manière déplaçable sur la seconde base d'instrument (4) à l'avant de la deuxième caméra de détail (14) ; et comprenant en outre
un système de traitement (16) configuré pour une communication avec la première caméra de vue d'ensemble (11) et les premier et deuxième miroirs (13, 15) ;
dans lequel, dans un état monté des première et seconde bases d'instrument (3, 4) sur le premier côté (S1) et le second côté (S2) du véhicule (V), respectivement, les premier et second projecteurs laser (7, 9) sont configurés pour projeter une première et une seconde ligne laser transversale (TL1, TL2), respectivement, sur le ou les fils de contact (2a, 2b) ;
dans lequel la première caméra de vue d'ensemble (11) est agencée pour capturer une image de vue d'ensemble du ou des fils de contact (2a) ;
dans lequel le système de traitement (16) est agencé pour traiter l'image de vue d'ensemble afin de localiser le ou les fils de contact (2a, 2b), et dans lequel le système de traitement (16) est en outre agencé pour commander une première position du premier miroir (13) et une deuxième position du deuxième miroir (15) sur la base du ou des fils de contact (2a, 2b) localisés, et
dans lequel la première caméra de détail (12) est agencée pour capturer une première image de détail à partir du premier miroir (13) des première et seconde lignes laser transversales projetées (TL1, TL2) sur le ou les fils de contact (2a, 2b), et dans lequel la deuxième caméra de détail (14) est agencée pour capturer une deuxième image de détail à partir du deuxième miroir (15) des première et seconde lignes laser transversales projetées (TL1, TL2) sur le ou les fils de contact (2a, 2b).

2. Système de mesure optique selon la revendication 1, dans lequel la première caméra de vue d'ensemble (11) a un champ de vision (γ1) plus grand qu'un champ de vision (γ2) des première et deuxième caméras de détail (12, 14).

3. Système de mesure optique selon la revendication 2, dans lequel le champ de vision (γ1) de la première caméra de vue d'ensemble (11) est compris entre 40° et 50°, et dans lequel le champ de vision (γ2) des première et deuxième caméras de détail (12, 14) est inférieur à 40°.

4. Système de mesure optique selon l'une quelconque des revendications 1 à 3, dans lequel le premier ensemble caméra (8) comprend une troisième caméra de détail (17) et un troisième miroir (18) agencé de manière déplaçable sur la première base d'instrument (3) à l'avant de la troisième caméra de détail (17), et dans lequel le second ensemble caméra (10) comprend une quatrième caméra de détail (19) et un quatrième miroir (20) agencé de manière déplaçable sur la seconde base d'instrument (4) à l'avant de la quatrième caméra de détail (19) ;
dans lequel le système de traitement (16) est en outre configuré pour une communication avec les troisième et quatrième miroirs (18, 20) ;
dans lequel, dans l'état monté des première et seconde bases d'instrument (3, 4), le système de traitement (16) est en outre agencé pour commander une troisième position du troisième miroir (18) et une quatrième position du quatrième miroir (20) sur la base du ou des fils de contact localisés (2a, 2b), et
dans lequel la troisième caméra de détail (17) est agencée pour capturer une troisième image de détail à partir du troisième miroir (18) des première et seconde lignes laser transversales projetées (TL1, TL2) sur le ou les fils de contact (2a, 2b), et dans lequel la quatrième caméra de détail (19) est agencée pour capturer une quatrième image de détail à partir du quatrième miroir (20) des première et seconde lignes laser transversales projetées (TL1, TL2) sur le ou les fils de contact (2a, 2b) .

5. Système de mesure optique selon l'une quelconque des revendications 1 à 4, dans lequel la première caméra de vue d'ensemble (11) est une caméra en noir et blanc.

6. Système de mesure optique selon l'une quelconque des revendications 1 à 5, dans lequel le second ensemble de caméra (10) de la seconde base d'instrument (4) comprend en outre une seconde caméra de vue d'ensemble (21) .

7. Système de mesure optique selon la revendication 6, dans lequel la seconde caméra de vue d'ensemble (21) est une caméra en couleur.

8. Système de mesure optique selon l'une quelconque des revendications 1 à 7, comprenant en outre des premier et second éléments de rail allongés (22, 23) qui sont chacun configurés pour être montés sur les premier et second côtés (S1, S2) du véhicule (V), respectivement, et dans lequel les premier et second éléments de montage (5, 6) sont configurés pour une connexion amovible aux premier et second éléments de rail (22, 23), respectivement.

9. Système de mesure optique selon la revendication 8, dans lequel les premier et second éléments de montage (5, 6) sont configurés pour une mise en prise déplaçable le long des premier et second éléments de rail (22, 23) respectivement, dans lequel les premier et second éléments de rail (22, 23) comprennent des premier et second éléments de blocage réglables (24, 25), respectivement, pour une mise en butée contre les premier et second éléments de montage (5, 6), respectivement.

10. Système de mesure optique selon l'une quelconque des revendications 1 à 9, dans lequel les premier et second projecteurs laser (7, 9) sont configurés pour projeter une lumière laser bleue ayant une longueur d'onde comprise entre 380 et 500 nm.

11. Système de mesure optique selon la revendication 10, dans lequel chacun des premier et second projecteurs laser (7, 9) présente une puissance de sortie supérieure à 400 mW.

12. Système de mesure optique selon la revendication 10 ou 11, dans lequel les première et deuxième caméras de détail (12, 14) comportent chacune un élément de filtre à bande étroite (12a, 14a) en correspondance avec la lumière laser bleue.

13. Système de mesure optique selon l'une quelconque des revendications 1 à 12, dans lequel les première et seconde bases d'instrument (3, 4) sont configurées pour être positionnées à un angle intérieur (α1, a2) compris entre 30° et 40° dans l'état monté des première et seconde bases d'instrument (3, 4).

14. Procédé de montage du système de mesure optique (1) selon l'une quelconque des revendications 1 à 13 sur un véhicule (V) agencé pour un déplacement en dessous d'un ou plusieurs fils de contact (2a, 2b), comprenant :
connecter le premier élément de montage (5) de la première base d'instrument (3) à un premier côté (S1) du véhicule (V),
connecter le second élément de montage (6) de la seconde base d'instrument (4) à un second côté (S2) du véhicule (V), de telle sorte que le premier projecteur laser (7) et le second projecteur laser (9) sont décalés dans la direction longitudinale sur une distance de décalage (Do).

15. Procédé selon la revendication 14, dans lequel la distance de décalage (Do) est inférieure à 3 cm.
